Europäisches Patentamt

European Patent Office

Office européen des brevets

(11) Publication number: **0 099 716**
A1

## (12) EUROPEAN PATENT APPLICATION

(21) Application number: **83304035.5**

(22) Date of filing: **12.07.83**

(51) Int. Cl.³: **A 23 L 1/31**
**A 23 B 4/10, A 23 J 3/00**

(30) Priority: **16.07.82 GB 8220620**

(43) Date of publication of application:
**01.02.84 Bulletin 84/5**

(84) Designated Contracting States:
**BE DE FR GB IT NL**

(71) Applicant: **BP Chemicals Limited**
**Belgrave House 76 Buckingham Palace Road**
**London, SW1W 0SU(GB)**

(72) Inventor: **Parker, David Andrew**
**BP Chemicals Limited Salt End**
**Hedon Hull HU12 8DS(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) Production of moulded protein products.

(57) The present invention relates to a process for producing a moulded protein product encased in an edible skin by treating the surface thereof with an aqueous solution comprising an edible acid salt of a carboxylic acid either alone or with an edible carboxylic acid or a mixture of an edible carboxylic acid and an edible neutral salt of a carboxylic acid, in which the molar ratio of the acid anion to the base cation is from 2:1 to 20:1 which reacts with protein to form a cohesive layer. The pH value of the aqueous solution is from 3 to 6. The aqueous solution is preferably made up by mixing acetic acid and sodium acetate with water in appropriate proportions.

EP 0 099 716 A1

1

# PRODUCTION OF MOULDED PROTEIN PRODUCTS

The present invention relates to the production of moulded protein products such as sausages, made from comminuted meat protein or meat substitutes based on non-animal protein.

Such moulded protein products have conventionally been produced by encasing the comminuted protein in an edible skin or membrane of e.g. collagen or natural gut. In another method, so-called "skinless" products are formed by treating the surface of the moulded protein product to coagulate the surface layer of protein so as to form a cohesive skin on the surface, thus avoiding the necessity of providing an external casing. The coagulation of the surface layer of protein can be achieved for instance by application of heat or by treating the surface with a suitable liquid such as an edible acid which reacts with soluble protein components to form a cohesive surface.

UK Patent Application GB 2 004 454A describes a method of producing a moulded meat or meat-like product having a fluid treated surface, wherein moulding is effected in a rigid mould cavity having a permeable wall through which is introduced the fluid for treating the surface of the product. In the preparation of a "skinless" sausage for example, an edible acid at ambient or elevated temperature may be introduced through the permeable wall of the cavity where it reacts with the protein of the meat to provide a cohesive surface. The term "edible acid" refers to acids which are permitted for use in connection with foodstuffs and which do not result in the production of inedible products. Such acids include organic acids, e.g. acetic acid and inorganic acids e.g. hydrochloric acid, and are generally employed in the form of an aqueous solution having a pH between 1.0 and 3.0.

According to the present invention the process for the production of a moulded protein product encased in an edible skin by treating the surface of the moulded protein product with a liquid which reacts with protein at the surface to form a cohesive layer is characterised in that the liquid used is an aqueous solution comprising an edible acid salt of a carboxylic acid either alone or with an edible carboxylic acid or a mixture of an edible carboxylic acid and an edible neutral salt of a carboxylic acid, in which the molar ratio of the acid anion to the base cation is from 2:1 to 20:1, and in which the pH value of the aqueous solution is from 3 to 6.

The term "edible carboxylic acid and edible neutral salt of a carboxylic acid" refers to neutral salts or acids which are permitted for use in foodstuffs and which do not react in the process to form inedible products.

The acid anion in the acid salts are preferably derived from saturated monocarboxylic acids having 1 to 4 carbon atoms, such as acetic acid and propionic acid. The base cation in the acid salt is preferably an alkali metal or alkaline earth metal or an ammonium ion, sodium or potassium salts eg sodium acetate being particularly preferred. If desired solutions of mixed salts can be used.

The aqueous solutions used in the process of the present invention are suitably made up by mixing with water the appropriate proportions of the acid salt either alone or with added carboxylic acid or of the neutral salt and the carboxylic acid to give the desired concentration of neutral or acid salt solution. The pH value of the solution is preferably from 3.3 to 4.7. For instance a typical composition may be made up by mixing acetic acid and sodium acetate with water in the proportions by weight 66.3% acetic acid, 9% sodium acetate and 24.7% water. The resulting solution has a molar ratio of acid anion to base cation of 10:1 and a pH of about 3.7.

Alternatively the solution described above may be prepared by reacting 91 parts by weight of an aqueous (80% strength) acetic acid solution with 9 parts by weight of an aqueous (49% strength) sodium hydroxide solution.

The pH of the aqueous solution can be controlled by varying the acid anion to base cation ratio to obtain a composition exhibiting the correct balance of properties in terms of reactivity with the meat protein and minimum corrosivity. This is demonstrated below:

| Acid anion: Base cation mole ratio | pH of acid salt solution |
|---|---|
| 20:1 | 3.5 |
| 10:1 | 3.7 |
| 5:1 | 4.1 |
| 2:1 | greater than 4.7 |

The process of making a moulded protein product encased in an edible skin may be carried out by known methods for instance using the process and apparatus described in UK Patent Application GB 2004454A. For example the moulded protein product encased in an edible skin may be produced by injecting the aqueous solution through a permeable wall in a rigid mould cavity containing the protein to be encased. In another method a permeable casing, eg of cellulose, is filled with the protein in its comminuted form and the filled permeable casing then treated with the aqueous solution so as to coagulate the surface protein layer thereby forming an edible skin thereon, after which the permeable casing is removed.

The quantities and concentrations of aqueous solutions used in the process of the present invention will depend on the type of protein product being made and the optimum values can be readily determined by experiment. Suitable concentrations are from 5 to 20% by weight of the acid salt or acid and neutral salt in water.

Example

(a) An aqueous solution of the acid salt solution was prepared by reacting 91 parts by weight of an aqueous (80% strength) acetic acid solution with 9 parts by weight of an aqueous (49% strength) sodium hydroxide solution. The resulting solution had a molar ratio of acid anion to base cation of 10:1 and a pH of about 3.7.

(b) Experiments were carried out using commercial de-skinned sausages and on sausage meat moulded by hand into a cylindrical shape.

Both types of sausages were immersed into a diluted solution of the acid salt (diluted by mixing 1 part of solution from (a) above with 8 parts of water). The immersed shapes were then allowed to stand for 30 minutes. After this duration a visual comparison was made with the untreated sausages. It was clearly evident that a cohesive skin had been formed around the shapes treated with the acid salt solution according to the present invention.

(c) The strength of the skin formed in (b) above was measured by the following method.

A copper wire was inserted through the bottom half of each of the sausage shapes (both treated and untreated). The ends of the copper wire were used to suspend a plastic beaker (500 ml capacity). Water was slowly poured into the beaker until the wire was pulled through the sausage shape in each case. The weight of water needed to effect rupture of the sausage skin was monitored in each case. The results are tabulated below.

|  | Wt of water |
|---|---|
| Commercial sausage de-skinned untreated | Unable to measure — sausage meat fell apart. |
| de-skinned treated | 177.1g |
| Sausage meat moulded by hand - untreated | 24.1g |
| treated | 75.3g |

(d) The treated and untreated sausages were then tested for their response to cooking by frying. All treated and untreated sausages were fried for about 5 minutes. The untreated sausages fell apart during cooking whereas those treated with the aqueous solution of the acid salt remained intact. The cooked treated sausages were tested for edibility and found to be edible.

The above experiments show that aqueous solutions of the acid salts are capable of forming an edible skin and have the additional advantage of being less corrosive and hence easier to handle than free acids.

Claims:

1. A process for the production of a moulded protein product encased in an edible skin by treating the surface of the moulded protein product with a liquid which reacts with protein at the surface to form a cohesive layer characterised in that the liquid used is an aqueous solution comprising an edible acid salt of a carboxylic acid either alone or with an edible carboxylic acid or a mixture of an edible carboxylic acid and an edible neutral salt of a carboxylic acid, in which the molar ratio of the acid anion to the base cation is from 2:1 to 20:1, and in which the pH value of the aqueous solution is from 3 to 6.

2. A process according to claim 1 wherein the acid anion in the acid salt is derived from saturated monocarboxylic acids having 1 to 4 carbon atoms.

3. A process according to claim 2 wherein the acid anion is derived from acetic acid or propionic acid.

4. A process according to any one of the preceding claims 1 to 3 wherein the base cation in the acid salt is an alkali metal or an alkaline earth metal or an ammonium ion.

5. A process according to claim 4 wherein the base cation in the acid salt is sodium or potassium.

6. A process according to any one of the preceding claims wherein the pH value of the aqueous solution is from 3.3 to 4.7.

7. A process according to any one of the preceding claims wherein the aqueous solution is made up by mixing acetic acid and sodium acetate with water in the proportion by weight 66.3% acetic acid, 9% sodium acetate and 24.7% water.

8. A process according to any one of the preceding claims 1 to 6 wherein the aqueous solution is made up by reacting 91 parts by weight of an aqueous (80% strength) acetic acid solution with 9 parts by weight of an aqueous (49% strength) sodium hydroxide solution.

9. A process according to any one of the preceding claims wherein the moulded protein product encased in an edible skin is produced by injecting the aqueous solution through a permeable wall of a rigid mould cavity containing the protein to be encased.

10. A process according to any one of the preceding claims 1 to 8 wherein the moulded protein product encased in an edible skin is produced by filling a permeable casing with the protein in its comminuted form and treating the filled permeable casing with the aqueous solution so as to coagulate the surface protein layer thereby forming an edible skin and thereafter removing the permeable casing.

## European Patent Office

### EUROPEAN SEARCH REPORT

Application number

EP 83 30 4035

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | GB-A-2 004 454 (TIVET DEVELOPMENTS LTD.) * Abstract; page 1, lines 103-116 * | 1,9 | A 23 L 1/31<br>A 23 B 4/10<br>A 23 J 3/00 |
| A | DE-A-2 722 919 (BP CHEMICALS LTD.) * Claims 1, 4, 5, 7 * | | |
| A | GB-A- 796 348 (J.A. BENCKISER GMBH) * Claim 1 * | | |
| A | CH-A- 468 792 (P. FLESCH et al.) * Claim * | | |

|  |
|---|
| TECHNICAL FIELDS SEARCHED (Int. Cl. 3) |
| A 23 B 4/00<br>A 23 J 3/00<br>A 23 L 1/00 |

The present search report has been drawn up for all claims

| Place of search | Date of completion of the search | Examiner |
|---|---|---|
| BERLIN | 07-10-1983 | SCHULTZE D |